# EUROPÄISCHE PATENTSCHRIFT

(11) **EP 1 672 326 B1**
(45) Veröffentlichungstag und Bekanntmachung des Hinweises auf die Patenterteilung: **07.09.2016**
(21) Anmeldenummer: 05019740.9
(22) Anmeldetag: 10.09.2005
(51) Int. Cl.: G01D 11/24, G01D 11/30, H01K 11/00, H02K 5/22

(54) **Winkelmesseinrichtung**
Angle measurement device
Dispositif de mesure d'angle

(30) Priorität: 17.12.2004 DE 102004060863
(43) Veröffentlichungstag der Anmeldung: 21.06.2006
(73) Patentinhaber: Dr. Johannes Heidenhain GmbH, 83292 Traunreut (DE)
(72) Erfinder: Riepertinger, Sebastian, 83139 Söchtenau (DE)

(56) Entgegenhaltungen:
- EP-A- 0 776 065
- WO-A-2004/017026
- US-A- 5 657 544
- US-A1- 2003 136 443

## Beschreibung

Die Erfindung betrifft eine Winkelmesseinrichtung gemäß dem Patentanspruch 1.

Winkelmesseinrichtungen, häufig auch Drehgeber genannt, dienen zur Messung von Drehbewegungen eines drehbar gelagerten Körpers, insbesondere einer Welle, über eine oder mehrere Umdrehungen. Die Drehbewegung wird dabei inkremental oder absolut erfasst. In Verbindung mit Zahnstangen und Zahnrädern oder mit Gewindespindeln lassen sich mit einer Winkelmesseinrichtung auch lineare Bewegungen messen.

Über Anschlusskabel werden der Winkelmesseinrichtung eine Betriebsspannung zugeführt und die Messsignale abgenommen und an eine Folgeelektronik weitergeleitet. Hierzu ist bei bekannten Winkelmesseinrichtungen an einer Kappe der Winkelmesseinrichtung eine Öffnung vorgesehen, durch die hindurch das Anschlusskabel der Winkelmesseinrichtung zugeführt und dort mit einer geeigneten elektrischen Anschlusseinheit kontaktiert werden kann.

Häufig werden derartigen Winkelmesseinrichtungen bzw. Drehgebern aber auch Signale bzw. elektrische Informationen von einem weiteren Körper, etwa einem Motor, zugeführt und ggf. nach deren Weiterverarbeitung an die besagte Folgeelektronik weitergeleitet. Die Signale werden dann über separate Signalleitungen, die an die Winkelmesseinrichtungen angeschlossen werden müssen, in die Winkelmesseinrichtungen geleitet. Bekannte derartige Anschlüsse sind vergleichsweise aufwändig zu montieren und begrenzen die Flexibilität der Einbauposition der Winkelmesseinrichtungen.

Der Erfindung liegt die Aufgabe zugrunde, eine Winkelmesseinrichtung der eingangs genannten Art zu schaffen, die mit einfachen Mitteln eine zuverlässige und schnelle Montage ermöglicht, wobei die Winkelmesseinrichtung in unterschiedliche Winkellagen funktionsgleich montierbar ist.

Diese Aufgabe wird erfindungsgemäß durch die Schaffung einer Winkelmesseinrichtung mit den Merkmalen des Patentanspruchs 1 gelöst.

Demnach umfasst die Winkelmesseinrichtung einen Grundkörper, eine Codescheibe, welche relativ zum Grundkörper um eine Achse A drehbar ist und einen Kontaktbereich der so ausgestaltet ist, dass über diesen elektrischer Strom oder elektrische Signale in die Winkelmesseinrichtung von einem stationären weiteren Körper einleitbar sind. Dabei ist der Kontaktbereich bezüglich des Grundkörpers stationär angeordnet. Ferner weist der Kontaktbereich an jedem Punkt das gleiche elektrische Potenzial auf. Der Kontaktbereich ist derart konfiguriert, dass sowohl ein erster Punkt P₁ mit den Polarkoordinaten R und α₁, als auch ein zweiter Punkt P₂ mit den Polarkoordinaten R und α₂ definierbar ist, wobei beide Punkte P₁, und P₂ auf dem Kontaktbereich zu liegen kommen. R stellt dabei den gleich großen Abstand der Punkte P₁ und P₂ von der Achse A dar, wogegen die Winkel α₁ und α₂ unterschiedlich groß sind.

Gemäß einer Weiterbildung der Erfindung wird der Kontaktbereich durch einen Ringköper oder ein Ringsegment gebildet.

Die Winkelmesseinrichtung ist derart konfiguriert, dass diese mit Hilfe mehrerer Befestigungseinrichtungen an einem weiteren Körper festlegbar ist. Dabei können beispielsweise Flanschbohrungen oder -schlitze als Befestigungseinrichtungen dienen. Die Befestigungseinrichtungen sind entlang einer Kreislinie angeordnet, deren Mittelpunkt auf der Achse A zu liegen kommt. Dabei entspricht der Winkelversatz benachbarter Befestigungseinrichtungen der Differenz zwischen α₁ und α₂.

In einer alternativen Ausgestaltung der Erfindung wird der Kontaktbereich von mindestens einem Pad und / oder mindesten einer Leiterbahn auf einer Platine gebildet. Diese Bauweise ist besonders vorteilhaft, wenn ein induktives Messprinzip zur Feststellung der Winkellage einer Welle verwendet wird. Der Kontaktbereich kann also eine durchgehende Fläche sein, aber auch aus mehreren einzelnen geometrisch getrennten Flächen bestehen.

Wie bereits erwähnt, weist der Kontaktbereich an jedem Punkt das gleiche elektrische Potenzial auf. Für den Fall, dass der Kontaktbereich von mehreren Pads oder mehreren separaten Flächen gebildet wird, bedeutet dies, dass diese Flächen elektrisch miteinander verbunden sind, so dass ein Potenzialausgleich zwischen diesen stattfindet. Wenn der Kontaktbereich durch einen einstückigen Körper gebildet wird, weist dieser an jedem Punkt das gleiche elektrische Potenzial auf, sofern der Körper elektrisch leitfähig ist. In der Regel ist der Kontaktbereich mit einer Eingangsschaltung der Winkelmesseinrichtung elektrisch verbunden.

Mit Vorteil ist das Ende der externen Signalleitung bzw. Stromleitung, welches mit dem Kontaktbereich zusammenwirkt als federndes Bauteil ausgestaltet um eine zuverlässige elektrische Kontaktierung zu ermöglichen.

Gemäß einem weiteren Aspekt der Erfindung ist zur Optimierung der Leichtgängigkeit und Funktion einer elektrischen Kupplung sowie zur Verbesserung der Dichtheit der Winkelmesseinrichtung zumindest ein Abstandshalter vorgesehen, mit dessen Hilfe die Kappe relativ zur Leiterplatte derart positioniert ist, dass die Öffnung bezüglich des elektrischen Kupplungselements ausgerichtet ist. Durch diese exakte relative räumliche Zuordnung der Kappe gegenüber der Leiterplatte kann ein hoher Grad an Dichtheit im Bereich der elektrischen Kupplung reproduzierbar erreicht werden.

Das vorgenannte Mittel ist beispielsweise eine formschlüssige Verbindung zwischen einem Grundkörper der Winkelmesseinrichtung und der Kappe. Alternativ dazu können auch Passstifte direkt an der Kappe angebracht sein (oder Bestandteil der Kappe sein), die mit entsprechenden Bohrungen in der Leiterplatte eine winkeltreue Montage bedingen. Hier weist also die Kappe Elemente auf, welche mit der Leiterplatte derart zusammenwirken, dass eine relative Winkellage zwischen Kappe und der Leiterplatte durch einen Formschluss festlegbar ist.

Häufig sind derartige Winkelmesseinrichtungen ein Bestandteil eines Datennetzwerkes, z.B. mit einer Ethernet-Architektur, an das sie Messdaten liefern aber auch von diesem Daten empfangen. Deshalb sind in diesem Zusammenhang die elektrischen Kupplungselemente oft bekannte Netzwerkstecker bzw. Netzwerkbuchsen, beispielsweise so genannte RJ45-Stecker bzw. entsprechende Buchsen.

Zusätzliche vorteilhafte Ausgestaltungen der Erfindung sind den abhängigen Ansprüchen zu entnehmen.

Weitere Merkmale und Vorteile der Erfindung werden bei der nachfolgenden Beschreibung eines Ausführungsbeispiels anhand der Figuren deutlich werden.

Es zeigen:
- Figur 1: eine perspektivische Schnitt-Ansicht einer Winkelmesseinrichtung,
- Figur 2: eine perspektivische Ansicht der Winkelmesseinrichtung,
- Figur 3: eine perspektivische Ansicht der Winkelmesseinrichtung, mit geschnittener Kappe
- Figur 4: eine weitere perspektivische Schnitt-Ansicht der Winkelmesseinrichtung,
- Figur 5: eine weitere perspektivische Ansicht der Winkelmesseinrichtung,

- Figur 6: eine Draufsicht auf die Winkelmesseinrichtung mit zwei ringförmigen Kontaktbereichen.

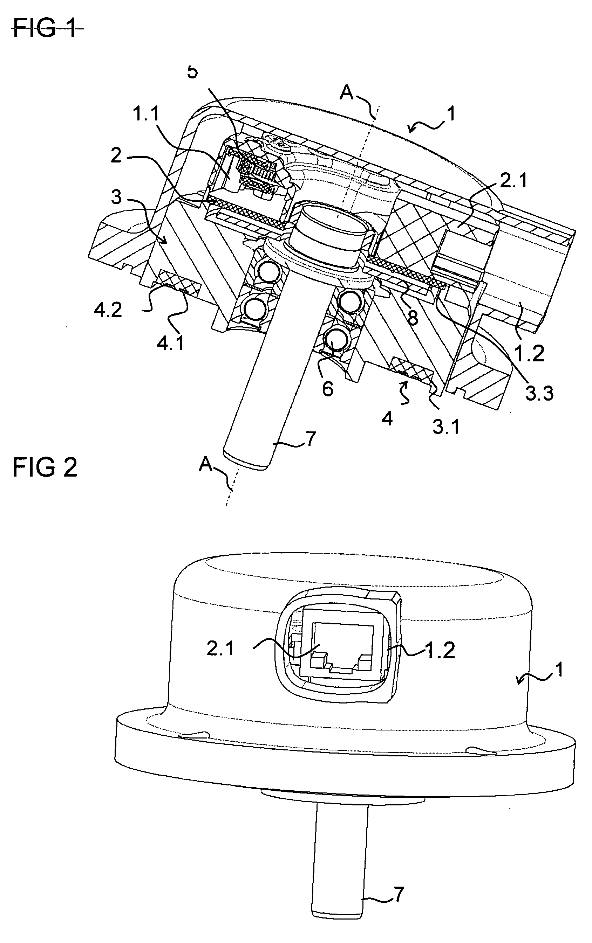

Die in den Figuren 1 bis 5 dargestellte Winkelmesseinrichtung weist eine Welle 7 zum Anschluss an einen zu messenden Körper auf. Die Verbindung zwischen der Welle 7 und dem zu messenden Körper wird beispielsweise mit einem durch die Welle 7 ragenden Verbindungsmittel in Form einer Befestigungsschraube realisiert.

Die Winkelmesseinrichtung selbst wird über eine Kappe 1 an einem weiteren Körper mit Hilfe von Flanschbohrungen 1.4 befestigt. Der zu messende Körper ist beispielsweise eine Motorwelle und der weitere Körper ein stationäres Motorgehäuse. Winkelmesseinrichtungen, die für diese Anwendungen konzipiert sind werden auch häufig als Drehgeber bezeichnet.

Der Grundkörper 3 weist eine Ausnehmung 3.1 auf, in der ein ringförmiger elektrisch nicht-leitender Isolierkörper 4 eingelegt ist. In diesem Isolierkörper befinden sich ein erster Ringkontakt 4.1 und ein zweiter Ringkontakt 4.2, welche aus einem elektrisch leitfähigen Material bestehen. Die Ringkontakte 4.1, 4.2 sind bezüglich der Welle 7 konzentrisch angeordnet.

In bekannter Weise ist die Welle 7 im Grundkörper 3 mit Hilfe von Lagern 6 drehbar gelagert, wobei an der Welle 7 eine im Inneren der Winkelmesseinrichtung angeordnete Codescheibe 8 befestigt ist und die Welle 7 über ein Getriebe 5 eine oder mehrere weitere Codescheiben antreibt. Die Codescheibe 8 ist demnach um die Achse A drehbar und wird im gezeigten Beispiel lichtelektrisch von einer Abtasteinrichtung abgetastet. Entsprechende lichtempfindliche Detektoren befinden sich auf einer Leiterplatte 2, auf der unter anderem elektrische Bauelemente zur Signalformung - beispielsweise Verstärkung und Digitalisierung - der von den Detektoren gelieferten Abtastsignalen angeordnet sind. Auf der Leiterplatte befindet sich neben dieser Messelektronik weiterhin ein elektrisches Kupplungselement, im vorgestellten Ausführungsbeispiel eine Buchse 2.1 durch welche ein RJ45 Stecker aufgenommen werden kann. Die Buchse 2.1 ist passgenau auf der Leiterplatte 2 positioniert.

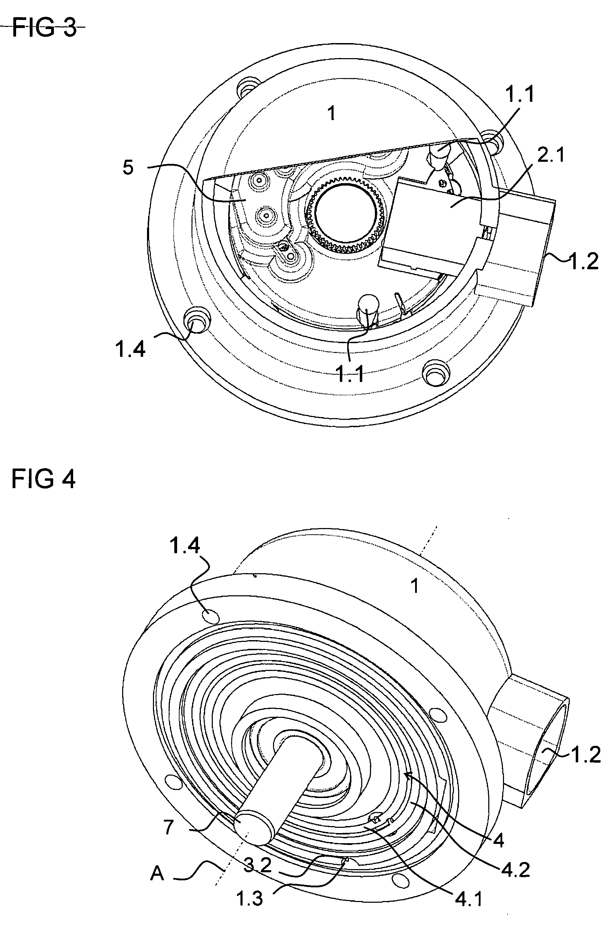

Zum Schutz der Winkelmesseinrichtung und ihrer Messelektronik ist die topfförmige Kappe 1 vorgesehen, welche über den Umfang klemmend am Grundkörper 3 befestigt ist. Im dargestellten Beispiel ist diese Verbindung eine Pressverbindung. Damit eine bezüglich der Winkellage eindeutige Zuordnung zwischen der Kappe 1 und dem Grundkörper 3 sichergestellt ist, weist der Grundkörper eine Pass-Ausnehmung 3.2 auf. Beim Zusammenbau wird die Kappe 1 so ausgerichtet, dass eine Nase 1.3 von der Pass-Ausnehmung 3.2 aufgenommen wird (Fig. 4). Ferner weist die Kappe 1 als integrale Bestandteile drei Abstandshalter 1.1 sowie eine Öffnung 1.2 auf. Die Kappe 1 ist im vorgestellt Ausführungsbeispiel als ein Gussteil ausgestaltet, wobei zur Erhöhung der Maßgenauigkeit der Länge der Abstandshalter 1.1 deren Endflächen spanabhebend bearbeitet wurden. Auf diese Weise wird eine überaus genaue Lage der Endflächen der Abstandshalter 1.1 in Bezug auf die Öffnung 1.2 erreicht.

Durch die Öffnung 1.2 kann ein entsprechender Stecker in die Buchse 2.1 eingeschoben werden. Die Wandung der Öffnung 1.2 dient gleichzeitig als Führung für den Stecker.

Derartige Winkelmesseinrichtungen bzw. Drehgeber werden häufig in vergleichsweise rauen Industrieumgebungen eingesetzt, weshalb es wichtig ist, dass die Kappe 1 den Innenraum der Winkelmesseinrichtung dicht umschließt. Gerade der Bereich der Steckverbindung bzw. der Öffnung 1.2 und Buchse 2.1 ist in diesem Zusammenhang kritisch. Ein hoher Grad an Dichtheit in diesem Bereich ist nicht zu erreichen, wenn die Lage der Buchse 2.1 relativ zur Öffnung 1.2 in der Kappe 1 zu große Toleranzen aufweist.

Wie bereits erwähnt, wird die Buchse 2.1 passgenau auf der Leiterplatte 2 platziert, jedoch weist die Leiterplatte 2 selbst bezüglich ihrer Ebenheit und Dicke Toleranzen auf. Diese Toleranzen sind vergleichsweise groß. Deshalb würde bei herkömmlichen Bauarten durch die als Führung dienende Öffnung 1.2 der Stecker im Allgemeinen schräg bzw. verkantet relativ zur Buchse 2.1 positioniert werden. Diese Verkantung kann so groß sein, dass die Steckverbindung nicht herstellbar ist, oder elektrisch unzuverlässige Kontakte erzeugt. Darüber hinaus können, wenn eine Steckverbindung noch herstellbar ist, Spaltöffnungen im Bereich der Steckverbindung entstehen, welche in Undichtigkeiten resultieren.

Eine exakte räumliche Zuordnung zwischen der Buchse 2.1 und der Öffnung 1.2 wird nunmehr dadurch erreicht, dass die Abstandshalter 1.1 sich auf der Leiterplatte 2 abstützen. Die Leiterplatte 2 ruht ihrerseits auf einem Leiterplattenauflager-, das im gezeigten Ausführungsbeispiel als ein umlaufender Bund 3.3 im Grundkörper 3 ausgebildet ist. Auf diese Weise werden die Dickentoleranzen der Leiterplatte 2 ausgeglichen, so dass in Richtung der Achse A der Welle 7 die Öffnung 1.2 exakt in der richtigen Position bezüglich der Buchse 2.1 platziert ist. Darüber hinaus wird durch die Pass-Ausnehmung 3.2 und die Nase 1.3, wie bereits erwähnt, eine bezüglich der Winkellage eindeutige Zuordnung zwischen der Kappe 1 und dem Grundkörper 3 sichergestellt. Somit wird auch in tangentialer Richtung ein passgenauer Anbau des Steckers an der Buchse 2.1 erreicht.

Häufig werden derartige Winkelmesseinrichtungen bzw. Drehgeber nicht nur durch die Steckverbindung für welche die Buchse 2.1 vorgesehen ist mit der Umgebung verbunden, sondern es werden oft, wie bereits oben beschrieben, auch der Winkelmesseinrichtung durch separate von außen kommende Leitungen elektrische Signale oder elektrischer Strom zugeführt. Diese Signale können beispielsweise von einem Temperaturfühler (etwa ein Widerstandsfühler beispielsweise vom Typ Pt 100) in einem Motor stammen, an dem die Winkelmesseinrichtung bzw. die Kappe 1 angeflanscht ist. Gemäß den Figuren 4 bis 6 sind an der Unterseite der Winkelmesseinrichtung zwei Kontaktbereiche vorgesehen, die im gezeigten Ausführungsbeispiel als zwei umlaufende Ringkontakte 4.1, 4.2 ausgestaltet sind. Diese dienen dazu mit (in den Figuren nicht dargestellten) federnden Kontaktelementen eines Temperaturausgangs des Motors zusammenzuwirken. Die Winkelmesseinrichtung ist dabei so ausgestaltet, dass es in unterschiedlichen Winkelstellungen - je nach erforderlicher Kabelabgangsrichtung - am Motorgehäuse angeflanscht werden kann, und dabei aber trotzdem eine Kontaktierung der Signalausgänge des Motors möglich ist. Mit anderen Worten treffen die Kontaktelemente des Temperaturausgangs des Motors stets auf die Ringkontakte 4.1, 4.2 der Winkelmesseinrichtung, unabhängig davon in welchen Winkelstellungen die Winkelmesseinrichtung am Motor angeflanscht wurde.

Die Ringkontakte 4.1, 4.2 sind jeweils als einstückige Blechteile ausgestaltet, die mit einer vergoldeten Schicht versehen sind. Somit weist jeder Punkt an einem Ringkontakt 4.1, 4.2 jeweils das gleiche elektrische Potenzial auf.

Parallel zur Achse A der Welle 7 sind Blechstreifen 4.11, 4.12, ausgerichtet, welche jeweils ein Bestandteil der Ringkontakte 4.1, 4.2 sind. Der Isolierkörper 4 ist so ausgestaltet, das dieser einen Bereich 4.1 aufweist, welcher innerhalb des Grundkörpers 3 achsparallel zur Welle 7 ausgerichtet ist und die Blechstreifen 4.11, 4.12 aufnimmt. Die Blechstreifen 4.11, 4.12 enden an der Leiterplatte 2 und sind dort an entsprechenden Leiterbahnen kontaktiert. Die Temperatursignale werden dann in entsprechenden Schaltungen auf der Leiterplatte 2 weiterverarbeitet und über die Buchse 2.1 als digitale Werte ggf. auch als analoge Signale ausgegeben.

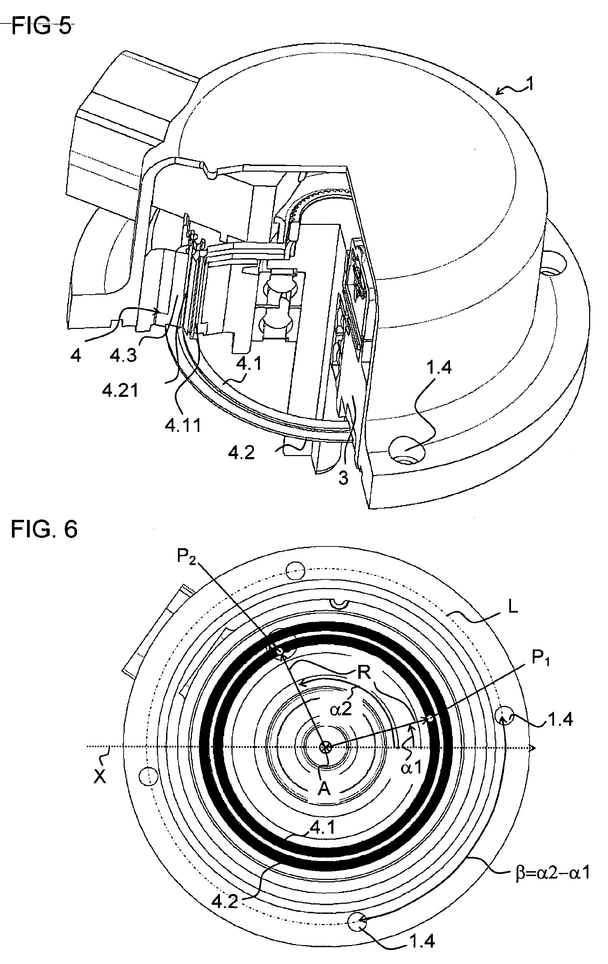

In der Figur 6 sind die geometrischen Verhältnisse der Ringkontakte 4.1, 4.2 dargestellt, wobei hier zwei Kontaktbereiche vorliegen, die durch die beiden Ringköper 4.1, 4.2 gebildet werden. In der Figur 6 ist eine Achse X eines Polarkoordinatensystems dargestellt, dessen Ursprung auf der Achse A der Winkelmesseinrichtung liegt. Die Winkelmesseinrichtung weist vier Flanschbohrungen 1.4 auf, welche mit einem Winkelversatz β von jeweils 90° angeordnet sind. Demnach kann die Winkelmesseinrichtung in vier verschiedenen Winkellagen relativ zum Motorgehäuse montiert werden. Damit die Winkelmesseinrichtung in allen vier verschiedenen Winkellagen montierbar ist, sind die Kontaktbereiche und damit die Ringköper 4.1, 4.2 derart konfiguriert, dass sowohl ein erster Punkt P₁ mit den Polarkoordinaten R und α₁, als auch ein zweiter Punkt P₂ mit den Polarkoordinaten R und α₂ definierbar ist. Die beiden Punkte P₁, P₂ kommen dabei auf dem Ringköper 4.1 zu liegen. R ist dabei der gleich große Abstand der Punkte P₁ und P₂ von der Achse A. Die Punkte P₁ und P₂ befinden sich also auf einer Kreislinie deren Mittelpunkt auf der Achse A liegt. Die Winkel α₁ und α₂ unterscheiden sich in ihrer Größe. Der Unterschied zwischen den Winkeln α₁ und α₂ beträgt im vorgestellten Ausführungsbeispiel 90°. Somit gilt: α₂ - α₁ = ß, entsprechend der Teilung der Flanschbohrungen 1.4.

Eine analoge geometrische Betrachtungsweise gilt auch für den zweiten Ringköper 4.2

## Patentansprüche

1. Winkelmesseinrichtung, welche so konfiguriert ist, dass diese mit Hilfe mehrerer Befestigungseinrichtungen (1.4) an einem weiteren stationären Körper festlegbar ist, umfassend
- einen Grundkörper (3),
- eine Codescheibe (8), welche relativ zum Grundkörper (3) um eine Achse A drehbar ist, und
- einen Kontaktbereich (4.1; 4.2) der so ausgestaltet ist, dass über diesen elektrischer Strom oder elektrische Signale in die Winkelmesseinrichtung von dem stationären weiteren Körper einleitbar sind, wobei der Kontaktbereich (4.1; 4.2) bezüglich des Grundkörpers (3) stationär angeordnet ist, **dadurch gekennzeichnet, dass**
der Kontaktbereich (4.1; 4.2) zur Montierbarkeit der Winkelmesseinrichtung in unterschiedlichen Winkellagen
- an jedem Punkt das gleiche elektrische Potenzial aufweist, und
- derart konfiguriert ist, dass sowohl ein erster Punkt (P₁) mit den Polarkoordinaten R und α₁, als auch ein zweiter Punkt (P₂) mit den Polarkoordinaten R und α₂ definierbar ist, wobei beide Punkte (P₁, P₂) auf dem Kontaktbereich (4.1; 4.2) zu liegen kommen, und R der gleich große Abstand der Punkte (P₁, P₂) von der Achse A ist und α₁ und α₂ unterschiedliche Winkel darstellen,
wobei die Befestigungseinrichtungen (1.4) entlang einer Kreislinie (L) angeordnet sind, und der Winkelversatz (β) benachbarter Befestigungseinrichtungen (1.4) der Differenz zwischen (α₁) und (α₂) entspricht.

2. Winkelmesseinrichtung gemäß dem Anspruch 1, **dadurch gekennzeichnet, dass** der Kontaktbereich (4.1; 4.2) durch einen Ringkörper gebildet wird.

3. Winkelmesseinrichtung gemäß dem Anspruch 1, **dadurch gekennzeichnet, dass** der Kontaktbereich (4.1; 4.2) von mindestens einem Pad und / oder mindesten einer Leiterbahn auf einer Platine gebildet wird.

4. Winkelmesseinrichtung gemäß einem der vorhergehenden Ansprüche, **dadurch gekennzeichnet, dass** der Kontaktbereich (4.1; 4.2) derart konfiguriert ist, dass ein Zusammenwirken mit einem gefederten Bauteil am Ende einer externen Signalleitung ermöglicht ist.

## Claims

1. Angle measurement device, which is configured in such a way that it can be fixed on a further stationary body with the aid of a number of fastening devices (1.4), comprising
- a main body (3),
- a code disc (8), which is rotatable in relation to the main body (3) about an axis A, and
- a contact region (4.1; 4.2), which is designed in such a way that electrical current or electrical signals can be introduced intro the angle measurement device from the stationary further body by way of this region, the contact region (4.1; 4.2) being arranged in a stationary manner with respect to the main body (3), **characterized in that**
to allow the angle measurement device to be mounted in different angular positions, the contact region (4.1; 4.2)
- has the same electrical potential at each point, and
- is configured in such a way that both a first point (P₁) with the polar coordinates R and α₁ and a second point (P₂) with the polar coordinates R and α₂ can be defined, the two points (P₁, P₂) coming to lie on the contact region (4.1; 4.2), and R being the equal distance of the points (P₁, P₂) from the axis A and α₁ and α₂ being different angles,
the fastening devices (1.4) being arranged along a circular line (L) and the angular offset (β) of the adjacent fastening devices (1.4) corresponding to the difference between (α₁) and (α₂).

2. Angle measurement device according to Claim 1, **characterized in that** the contact region (4.1; 4.2) is formed by an annular body.

3. Angle measurement device according to Claim 1, **characterized in that** the contact region (4.1; 4.2) is formed by at least one pad and/or at least one conductor track on a printed circuit board.

4. Angle measurement device according to one of the preceding claims, **characterized in that** the contact region (4.1; 4.2) is configured in such a way that an interaction with a sprung component at the end of an external signal line is made possible.

## Revendications

1. Dispositif de mesure d'angle configuré de manière à ce qu'il puisse être fixé à l'aide d'une pluralité de dispositifs de fixation (1.4) à un autre corps stationnaire, comprenant
- un corps de base (3),
- un disque codeur (8) qui peut être mis en rotation par rapport au corps de base (3) autour d'un axe A, et
- une région de contact (4.1 ; 4.2) qui est conçue de manière à ce qu'un courant électrique ou des signaux électriques puissent être introduits par l'intermédiaire de celui-ci dans le dispositif de mesure d'angle par l'autre corps stationnaire, dans lequel la région de contact (4.1 ; 4.2) est disposée de manière stationnaire par rapport au corps de base (3), **caractérisé en ce que**, pour l'aptitude au montage du dispositif de mesure d'angle à différentes positions angulaires, la région de contact (4.1 ; 4.2)
- présente le même potentiel électrique en chaque point, et
- est configurée de manière à ce qu'aussi bien un premier point (P₁) de coordonnées polaires R et α₁, qu'un second point (P₂) de coordonnées polaires R et α₂ puissent être définis, dans lequel les deux points (P₁, P₂) se situent sur la région de contact (4.1 ; 4.2), et R représente la même distance entre les points (P₁, P₂) et l'axe A et α₁ et α₂ représentent des angles différents,
dans lequel les dispositifs de fixation (1.4) sont disposés le long d'une ligne circulaire (L), et le décapage angulaire (β) entre des dispositifs de fixation voisins (1.4) correspond à la différence entre (α₁) et (α₂).

2. Dispositif de mesure d'angle selon la revendication 1, **caractérisé en ce que** la région de contact (4.1 ; 4.2) est formée par un corps annulaire.

3. Dispositif de mesure d'angle selon la revendication 1, **caractérisé en ce que** la région de contact (4.1 ; 4.2) est formée par au moins un plot et/ou au moins une piste conductrice sur une carte.

4. Dispositif de mesure d'angle selon l'une quelconque des revendications précédentes, **caractérisé en ce que** la région de contact (4.1 ; 4.2) est configurée de manière à permettre une coopération avec un composant sollicité par ressort à une extrémité d'une ligne de signal externe.
